# EUROPEAN PATENT SPECIFICATION

(11) **EP 3 599 149 B1**
(45) Date of publication and mention of the grant of the patent: **19.08.2020**
(21) Application number: 19182201.4
(22) Date of filing: 25.06.2019
(51) Int. Cl.: B62K 11/04, F02M 35/04

(54) **STRADDLED VEHICLE**
GRÄTSCHSITZFAHRZEUG
VÉHICULE À ENFOURCHER

(30) Priority: 24.07.2018 JP 2018138674
(43) Date of publication of application: 29.01.2020
(73) Proprietor: YAMAHA HATSUDOKI KABUSHIKI KAISHA, Iwata-shi, Shizuoka 438-8501 (JP)
(72) Inventor: KITAGAWA, Masahiko, Iwata-shi, Shizuoka 438-8501 (JP)
(74) Representative: Grünecker Patent- und Rechtsanwälte PartG mbB

(56) References cited:
- EP-A1- 1 614 889
- EP-A1- 2 436 584
- EP-A1- 2 883 783
- Anonymous: "Yamaha Snowmobile 1996 OEM Parts Diagram for Shroud | Partzilla.com", , 1 January 1996 (1996-01-01), XP055644165, Retrieved from the Internet: URL:https://www.partzilla.com/catalog/yama ha/snowmobile/1996/vmax-600-vx600w/shroud [retrieved on 2019-11-19]

## Description

The present invention relates to a straddled vehicle.

There is a straddled vehicle that includes an air cleaner and an air passage for introducing traveling air to the air cleaner. For example, the straddled vehicle disclosed in JJP 2006-017090 A, an air passage extending from the air cleaner in a vehicle front-rear direction of the vehicle is provided. The air passage has an open air introducing port, and the open air introducing port is open toward the front of the vehicle.

The inventor of the present invention considered attaching a side cover for guiding air to the air passage to a side surface of a straddled vehicle in order to improve an intake efficiency to the air cleaner. However, in this case, a vehicle weight increases because of the side cover. In addition, as the side cover becomes an obstacle, access to an inside of the vehicle may become difficult. In this case, a maintainability is reduced. Document US9567952 shows the preamble of claim 1.

It is an object of the present invention is to suppress an increase in a vehicle weight and a decrease in maintainability in a straddled vehicle while improving an intake efficiency with a side cover. According to the present invention said object is solved by a straddled vehicle having the features of independent claim 1. Preferred embodiments are laid down in the dependent claims.

A straddled vehicle according to one aspect includes a head pipe, a steering device, a fuel tank, a seat, an air cleaner, a first air passage, and a side cover. The steering device is rotatably supported by the head pipe. The fuel tank is disposed behind the head pipe. The seat is disposed behind the fuel tank. The air cleaner is disposed below the fuel tank or the seat. The first air passage guides air to the air cleaner, and at least a portion of the first air passage is disposed to a lateral side of the fuel tank.

The side cover is connected to the first air passage. The side cover includes an intake port, an exhaust port, and a second air passage. The intake port is disposed forward of the first air passage and is open forward of the vehicle. The exhaust port communicates with the first air passage. The second air passage connects the intake port and the exhaust port. The side cover includes an inner cover and an outer cover. The outer cover is disposed outward of the inner cover in the vehicle width direction, and is detachably attached to the inner cover. A rear edge of the outer cover is disposed with a gap from the inner cover.

In the straddled vehicle according to present aspect, the side cover includes the inner cover and the outer cover detachably attached to the inner cover. Therefore, by removing the outer cover, access to the inside of the vehicle becomes easy, and maintainability can be improved. In addition, the rear edge of the outer cover is disposed with the gap from the inner cover. Therefore, a weight of the side cover can be reduced as compared with the case where there is no gap. Thereby, an increase in a vehicle weight can be suppressed.

The straddled vehicle may further include a radiator disposed below the outer cover in a vehicle side view. In this case, by removing the outer cover, access to the radiator becomes easy. Thereby, maintainability of the radiator is improved.

A rear edge of the outer cover may include a first rear edge portion and a second rear edge portion. The first rear edge portion may extend forward and upward in the vehicle side view. The second rear edge portion may extend forward and downward from a rear end of the first edge portion in the vehicle side view. In this case, since the rear edge of the outer cover has a shape extending rearward, the gap can be made longer. Thereby, the weight of the side cover can be further reduced.

The inner cover may include a first inner edge portion and a second inner edge portion. In the vehicle side view, the first inner edge portion may be disposed with a gap from the first rear edge portion, and may extend forward and upward. In the vehicle side view, the second inner edge portion may be disposed with a gap to the second rear edge portion, and may extend forward and downward. In this case, a gap can be formed between the inner cover and the outer cover while suppressing from protruding from the outer cover.

The outer cover may include a first cover and a second cover. The first cover may be attached to the inner cover. The second cover may be disposed outward of the first cover in the vehicle width direction. In this case, the outer cover has a double structure of the first cover and the second cover. Therefore, the second cover is supported by the inner cover via the first cover, so that the a structure in which the rear edge of the outer cover is disposed with a gap from the inner cover can be easily and firmly formed. Moreover, since the outer cover has the double structure, the rigidity of the outer cover can be improved. Therefore, although the outer cover is disposed with the gap from the inner cover, insufficient rigidity can be prevented.

The inner cover may include an attaching portion to which the first cover is attached. The first cover may include an arm portion extending outward in the vehicle width direction from the attaching portion. In this case, the outer cover is supported by the inner cover via the arm portion, so that the structure in which the rear edge of the outer cover is disposed with the gap from the inner cover can be easily and firmly formed.

The steering device may include a front suspension that inclines rearward and upward. In the vehicle front view, at least a portion of the intake port may be disposed outward of the front suspension in the vehicle width direction. In the vehicle side view, the intake port may be disposed to be inclined rearward and upward together with the front suspension. In this case, the air that has been disturbed against the front suspension can be efficiently sucked from the intake port.

The inner cover may include an inner intake port disposed inward of the intake port in the vehicle width direction. In this case, the air flowing inside of the side cover can be efficiently sucked from the inner intake port.

The steering device may include a front suspension. In the vehicle front view, the entire intake port may be disposed outward of the front suspension in the vehicle width direction. In this case, the air flowing outside of the front suspension can be efficiently sucked by the intake port, and the air flowing inside of the front suspension can be efficiently sucked by the inner intake port.

The side cover may include a lattice member provided across the exhaust port. In this case, the lattice member can prevent an entry of foreign matter into the passage.

The straddled vehicle may further include a tank cover attached to the fuel tank. At least a portion of the first air passage may be provided between the fuel tank and the tank cover. In this case, the first air passage can be constructed using a space between the fuel tank and the tank cover.

In the vehicle side view, the rear end may overlap the first air passage. In this case, the first air passage and the side cover can be compactly arranged in a front-rear direction.

### BRIEF DESCRIPTION OF THE DRAWINGS

- FIG. 1: is a side view of a straddled vehicle.
- FIG. 2: is a front view of the straddled vehicle.
- FIG. 3: is a top view of a tank cover and a side cover.
- FIG. 4: is a perspective view of the tank cover and the side cover.
- FIG. 5: is an exploded perspective view of the tank cover and the side cover.
- FIG. 6: is a side view of the side cover.
- FIG. 7: is a front view of the side cover.
- FIG. 8: is a top view of the side cover.
- FIG. 9: is a bottom view of the side cover.
- FIG. 10: is a rear view of the side cover.
- FIG. 11: is a side view of the side cover.
- FIG. 12: is a perspective view of the side cover.
- FIG. 13: is an enlarged side view of a front portion of the straddled vehicle.
- FIG. 14: is an enlarged front view of the front portion of the straddled vehicle.
- FIG. 15: is an exploded perspective view of the side cover.
- FIG. 16: is an exploded perspective view of an outer cover.
- FIG. 17: is an exploded perspective view of the outer cover.
- FIG. 18: is a side view showing a flow of air guided by the side cover.
- FIG. 19: is a top view showing the flow of air guided by the side cover.

### DETAILED DESCRIPTION OF THE PREFERRED EMBODIMENTS

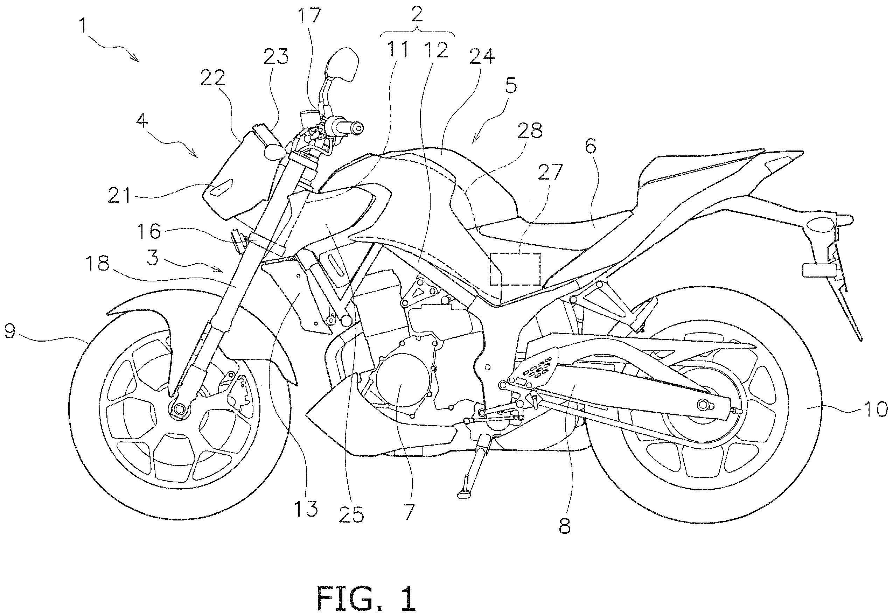

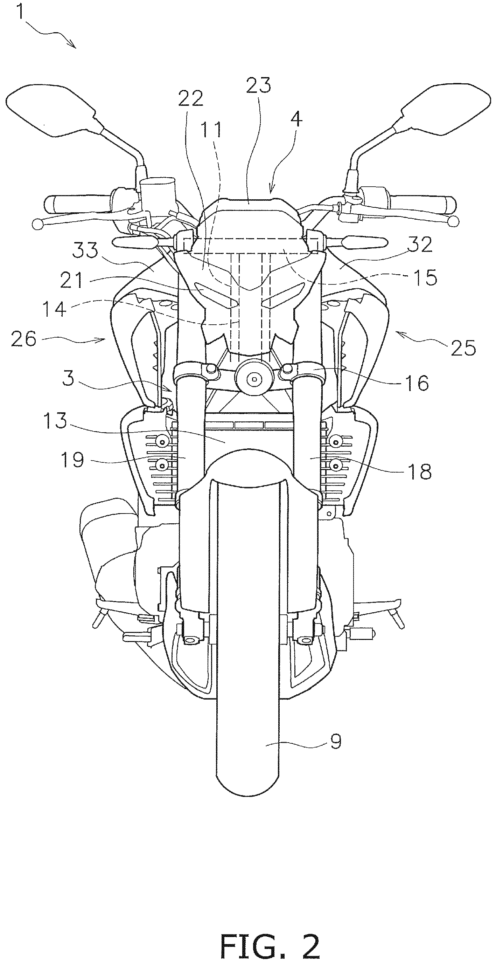

Hereinafter, a straddled vehicle according to an embodiment will be described with reference to the drawings. FIG. 1 is a side view of a straddled vehicle 1 according to the embodiment. FIG. 2 is a front view of the straddled vehicle 1 according to the embodiment. The straddled vehicle 1 according to the embodiment is a so-called road sport type motorcycle. As shown in FIG. 1, the straddled vehicle 1 includes a vehicle body frame 2, a steering device 3, a headlight unit 4, a fuel tank 5, a seat 6, an engine 7, a swing arm 8, a front wheel 9, and a rear wheel 10.

In the present specification, "front"," rear"," left", and "right" directions are directions as viewed from the driver sitting on the seat 6. "Connection" includes not only direct connection but also indirect connection. In addition, "connection" does not necessarily mean that separate members are fixed to each other, but also includes that a plurality of portions are continuous in an integral member.

Inward in a vehicle width direction means a direction toward the center of the straddled vehicle 1 in the vehicle width direction. Outward in the vehicle width direction means a direction opposite to inward in the vehicle width direction. That is, outward in the vehicle width direction means a direction away from the center of the straddled vehicle 1 in the vehicle width direction.

In the present specification, "extending in a front-rear direction" is not limited to extending in parallel in the front-rear direction. "Extending in the front-rear direction" means that the smaller one of the angles with the horizontal direction is 45 degrees or less. That is, "extends in the front-rear direction" also includes the case of extending in a direction inclined with respect to the horizontal direction. The same applies to the vehicle width direction and an up-down direction.

The vehicle body frame 2 includes a head pipe 11 and a body frame 12. The head pipe 11 rotatably supports the steering device 3. The body frame 12 is connected to the head pipe 11 and extends rearward from the head pipe 11. The body frame 12 supports the fuel tank 5, the seat 6, and the engine 7.

The fuel tank 5 is disposed behind the head pipe 11. The seat 6 is disposed behind the fuel tank 5. The engine 7 is disposed below the fuel tank 5. A radiator 13 is disposed in front of the engine 7. The swing arm 8 is rotatably supported by the engine 7 or the body frame 12. The swing arm 8 rotatably supports the rear wheel 10.

As shown in FIG. 2, the steering device 3 includes a steering shaft 14, an upper bracket 15, a lower bracket 16, a handle 17, and front suspensions 18 and 19. The steering shaft 14 is inserted into the head pipe 11 and is rotatably supported by the head pipe 11. The upper bracket 15 and the lower bracket 16 are attached to the steering shaft 14.

The handle 17 is connected to an upper portion of the steering shaft 14 via the upper bracket 15. The front suspensions 18 and 19 are supported by the upper bracket 15 and the lower bracket 16. The front suspensions 18 and 19 rotatably support the front wheel 9. In a vehicle side view, the front suspensions 18 and 19 extend obliquely rearward and upward.

The headlight unit 4 is disposed in front of the handle 17. The headlight unit 4 is attached to the steering device 3. The headlight unit 4 includes a headlight 21, a headlight cover 22, and a meter 23.

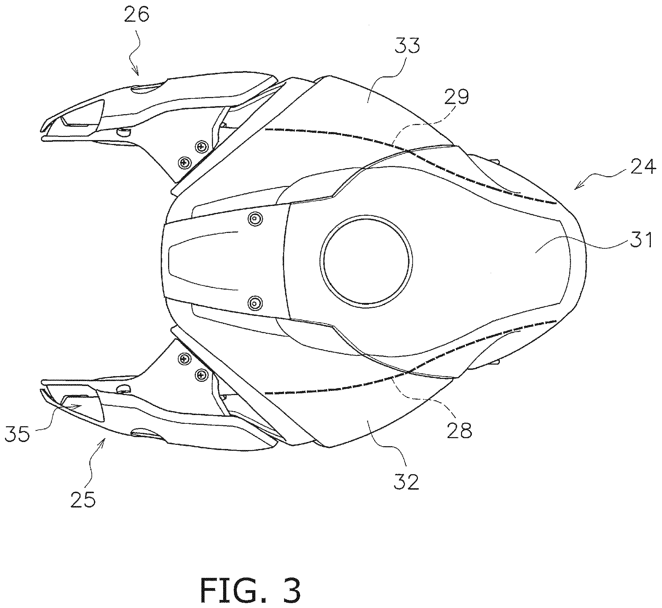

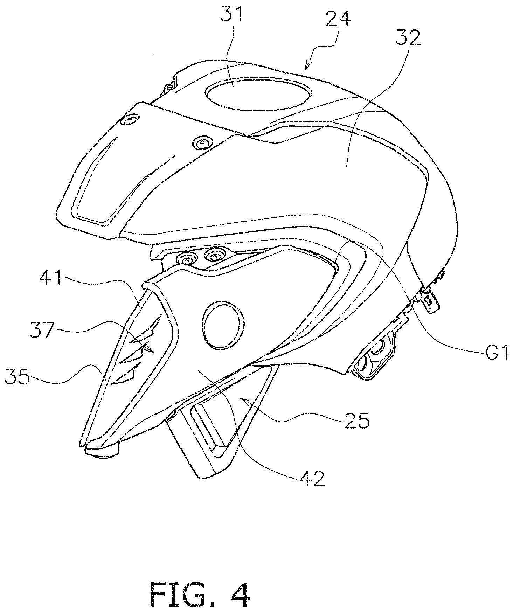

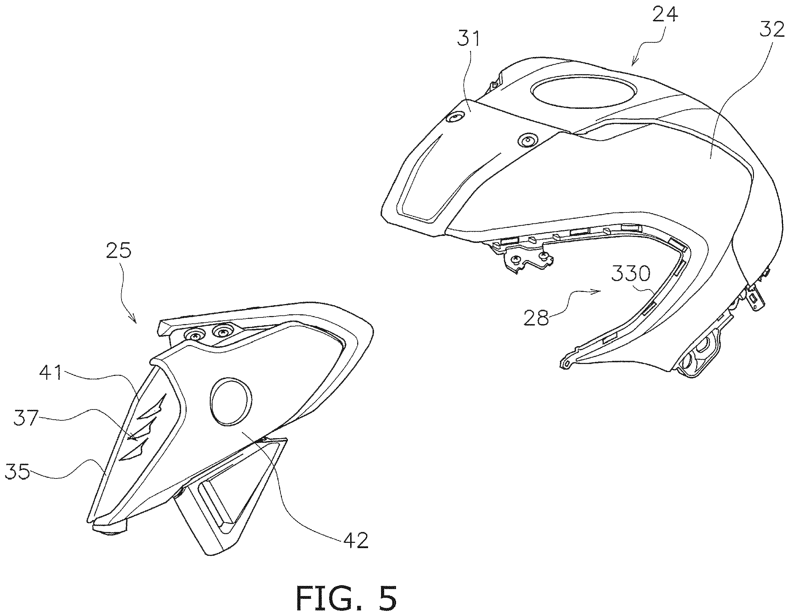

The straddled vehicle 1 includes a tank cover 24, a left side cover 25, and a right side cover 26 (see FIG. 2). FIG. 3 is a top view of the tank cover 24 and the left and right side covers 25 and 26. FIG. 4 is a perspective view of the tank cover 24 and the left side cover 25. FIG. 5 is an exploded perspective view of the tank cover 24 and the left side cover 25. Note that in FIGS 4 and 5, a portion of the tank cover 24 and the right side cover 26 are omitted.

The tank cover 24 includes a central tank cover 31, a left tank cover 32, and a right tank cover 33. The central tank cover 31 is disposed above and behind the fuel tank 5. The left tank cover 32 and the right tank cover 33 are disposed to a lateral side of the fuel tank 5. In the vehicle side view, the left tank cover 32 and the right tank cover 33 overlap with the fuel tank 5. The left tank cover 32 is disposed to the left side of the fuel tank 5. The right tank cover 33 is disposed to the right side of the fuel tank 5.

As shown in FIG. 1, the straddled vehicle 1 includes an air cleaner 27 and a first air passage 28. The air cleaner 27 is disposed below the seat 6. The air cleaner 27 purifies an intake air to the engine 7. The first air passage 28 guides air to the air cleaner 27. The first air passage 28 is disposed to the lateral side of the fuel tank 5. The first air passage 28 is provided between the fuel tank 5 and the tank cover 24. As shown in FIG. 5, the left tank cover 32 includes an opening 320. The opening 320 opens forward. The first air passage 28 extends from the opening 320 to the air cleaner 27 through a space inward of the left tank cover 32.

The left side cover 25 is connected to the left tank cover 32. The left side cover 25 is disposed above the radiator 13. The left side cover 25 is disposed in front of the opening 320 of the left tank cover 32. The left side cover 25 is connected to the first air passage 28.

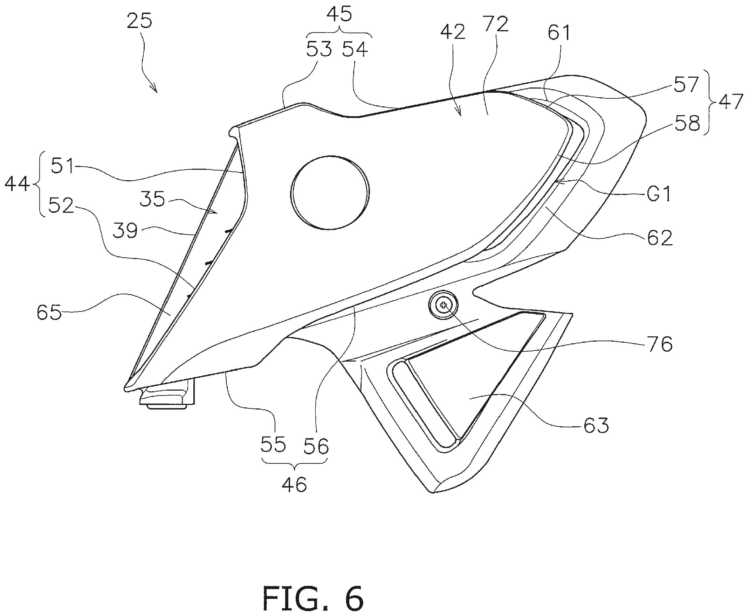

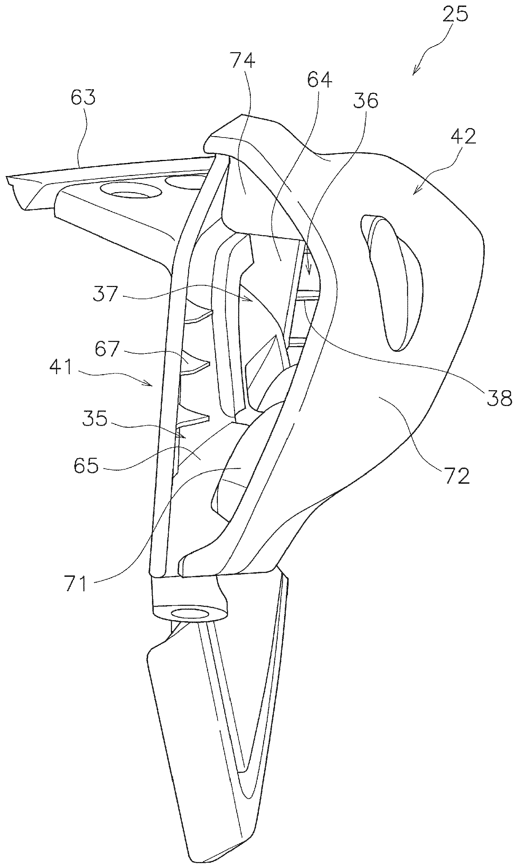

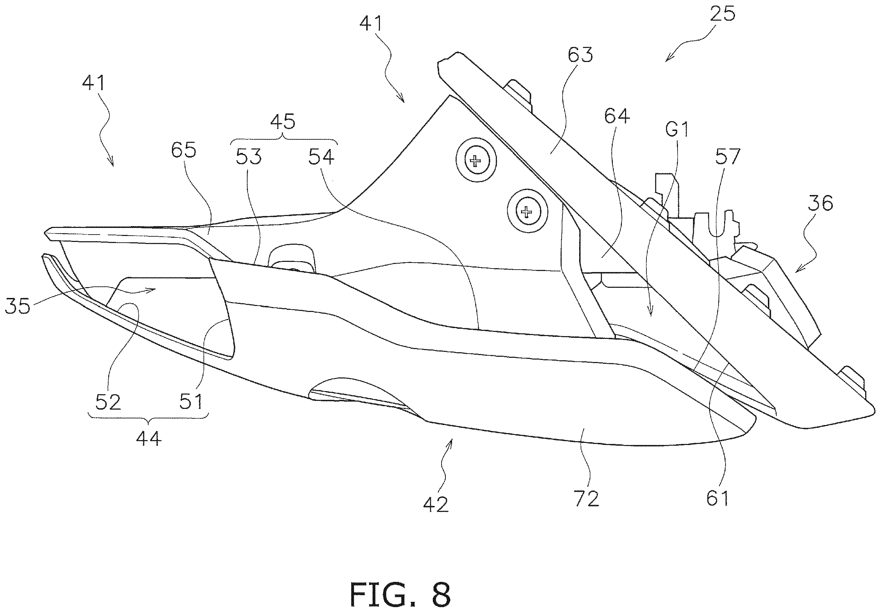

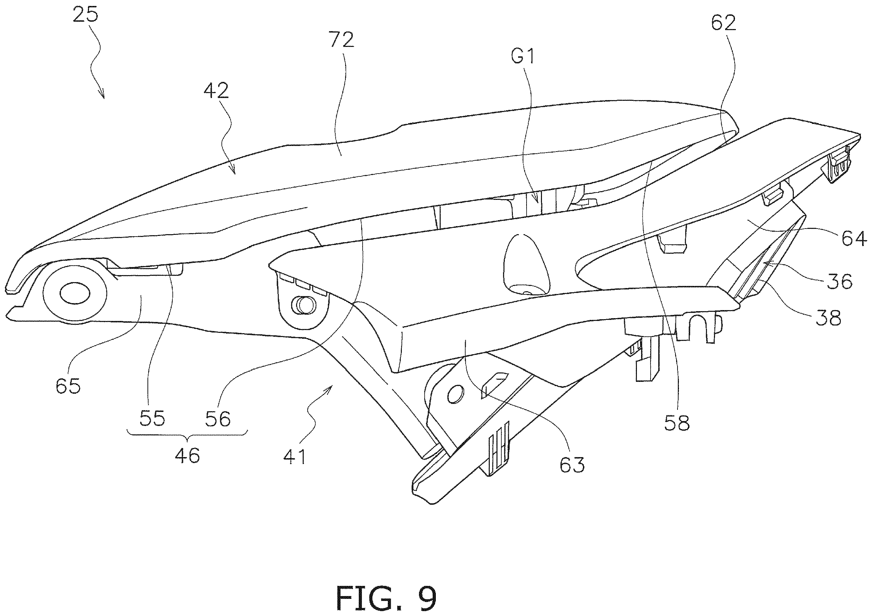

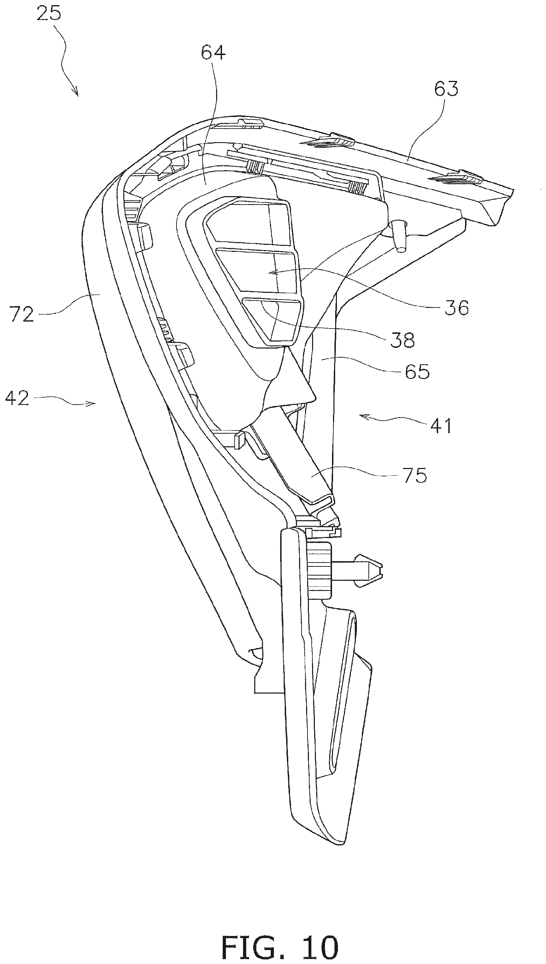

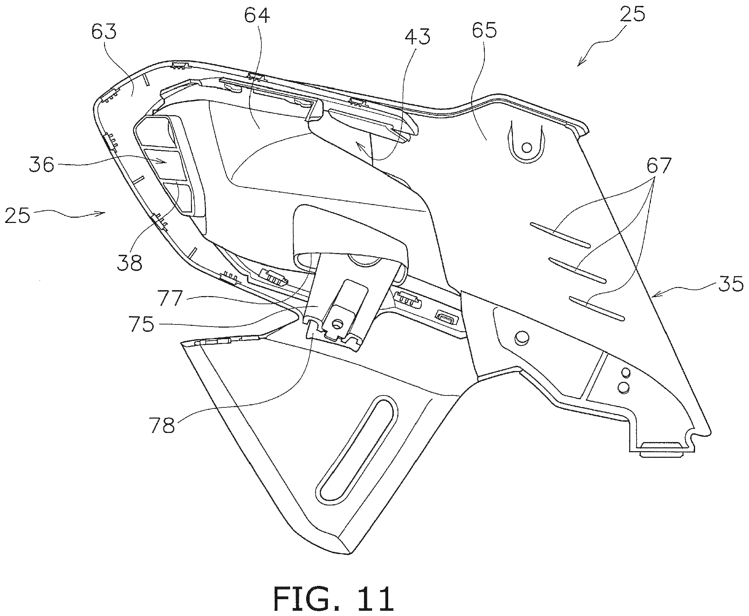

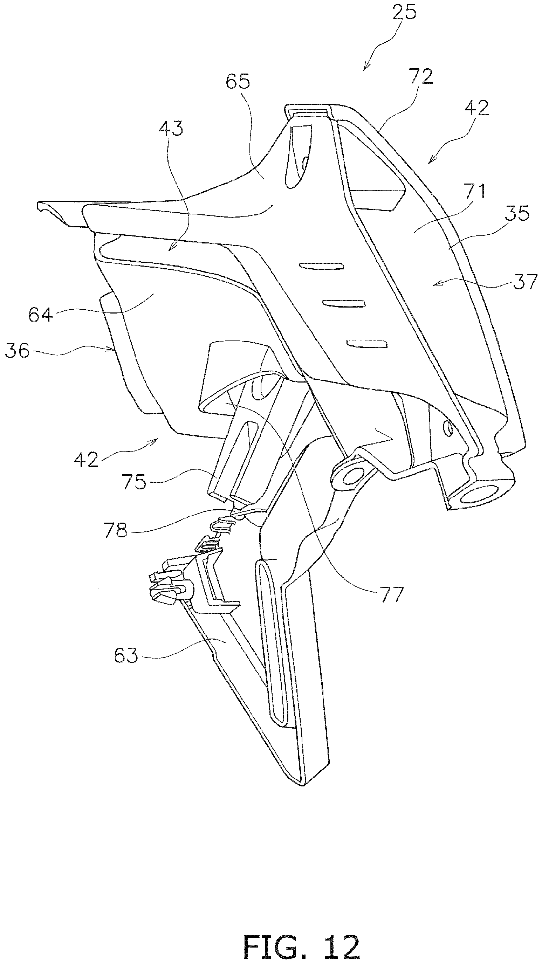

FIG. 6 is a side view of the left side cover 25. FIG. 7 is a front view of the left side cover 25. FIG. 8 is a top view of the left side cover 25. FIG. 9 is a bottom view of the left side cover 25. FIG. 10 is a rear view of the left side cover 25. FIG. 11 is a side view of the left side cover 25. FIG. 12 is a perspective view of the left side cover 25.

As shown in FIGS. 8 to 12, the left side cover 25 includes an intake port 35, an exhaust port 36, and a second air passage 37. The intake port 35 is provided at a front portion of the left side cover 25. The intake port 35 opens forward. The intake port 35 is disposed forward of the first air passage 28.

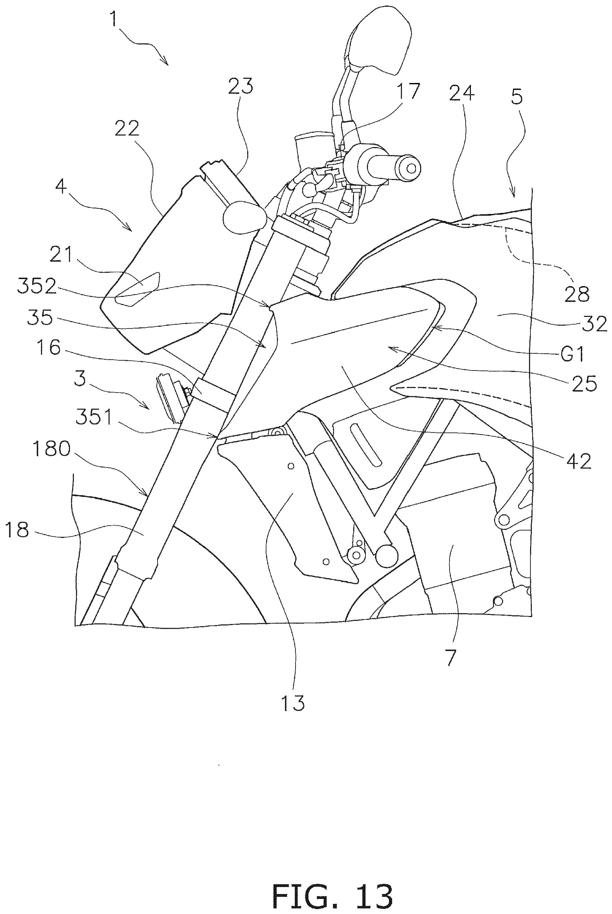

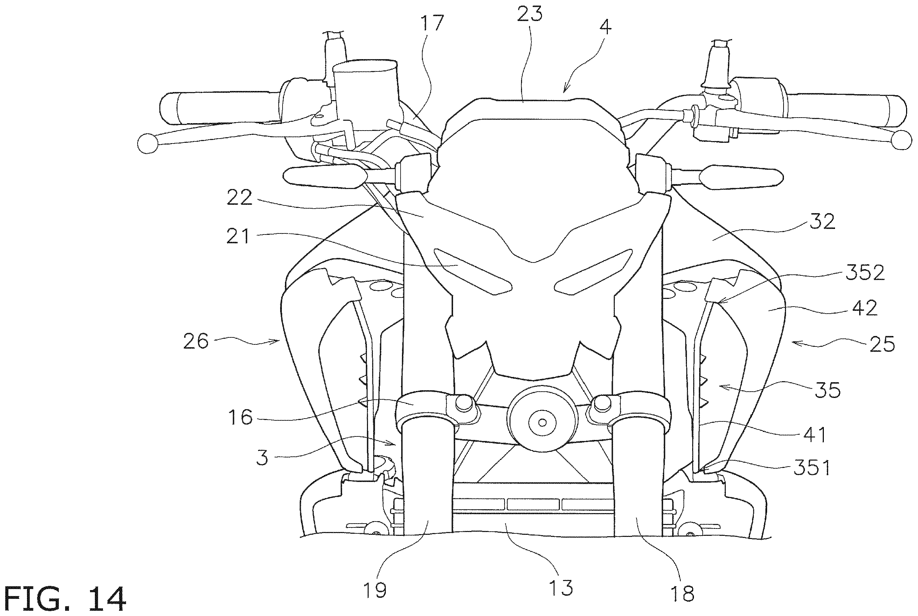

FIG. 13 is an enlarged side view of a front portion of the straddled vehicle 1. FIG. 14 is an enlarged front view of the front portion of the straddled vehicle 1. As shown in FIG. 13, the intake port 35 is disposed behind the front suspension 18 in the vehicle side view. Specifically, in the vehicle side view, the intake port 35 is disposed rearward of a front edge 180 of the front suspension 18. In the vehicle side view, the intake port 35 is disposed to be inclined rearward and upward together with the front suspension 18.

As shown in FIG.14, in the vehicle front view, the entire intake port 35 is disposed outward of the front suspension 18 in the vehicle width direction. In the vehicle front view, a lower end 351 of the intake port 35 is located lower than the lower bracket 16. In the vehicle front view, an upper end 352 of the intake port 35 is located higher than the lower bracket 16. In the vehicle front view, the lower end 351 of the intake port 35 is located lower than a lower end of the headlight unit 4. In the vehicle front view, the upper end 352 of the intake port 35 is located higher than the lower end of the headlight unit 4.

As shown in FIGS. 8 to 11, the exhaust port 36 is provided at the rear of the left side cover 25. The exhaust port 36 opens rearward. The exhaust port 36 is disposed in the opening 320 of the left tank cover 32 so as to face the first air passage 28. The exhaust port 36 communicates with the first air passage 28. The left side cover 25 includes a lattice member 38. The lattice member 38 is provided across the exhaust port 36. The second air passage 37 is provided inside the left side cover 25. The second air passage 37 connects the intake port 35 and the exhaust port 36.

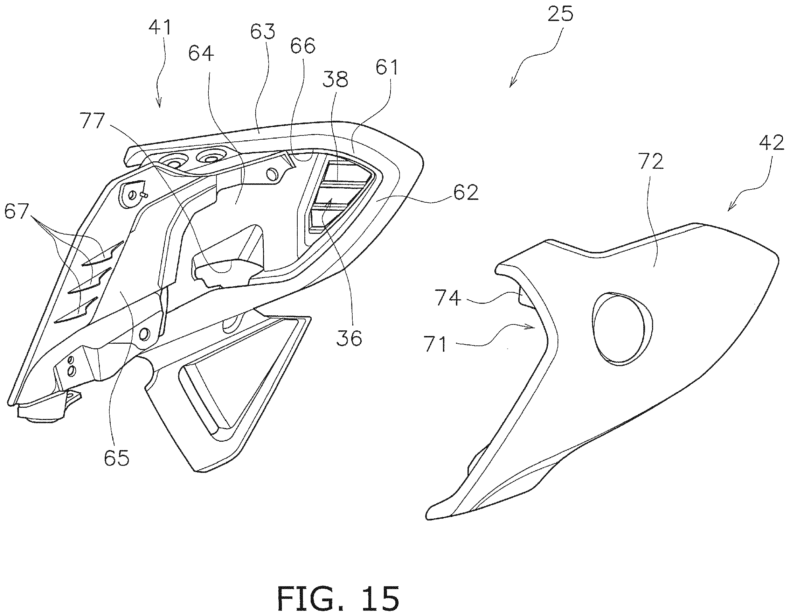

FIG. 15 is an exploded perspective view of the left side cover 25. As shown in FIG. 15, the left side cover 25 includes an inner cover 41 and an outer cover 42. The inner cover 41 is attached to the tank cover 24. The inner cover 41 constitutes one inner side surface of the second air passage 37. The outer cover 42 constitutes the other inner side surface of the second air passage 37. The intake port 35 described above is provided across the inner cover 41 and the outer cover 42. The exhaust port 36 is provided in the inner cover 41.

As shown in FIGS. 11 and 12, the inner cover 41 includes an inner intake port 43. The inner intake port 43 is disposed inward of the intake port 35 in the vehicle width direction. The inner intake port 43 is disposed rearward of the intake port 35. The inner intake port 43 is disposed forward of the exhaust port 36. The inner intake port 43 opens forward and inward in the vehicle width direction.

The outer cover 42 is disposed outward of the inner cover 41 in the vehicle width direction. The outer cover 42 is separate from the inner cover 41 and is detachably attached to the inner cover 41. The outer cover 42 overlaps with the inner cover 41 in the vehicle side view. At least a portion of the outer cover 42 overlaps with the exhaust port 36 in the vehicle side view. As shown in FIG. 13, the radiator 13 mentioned above is disposed below the outer cover 42 in the vehicle side view.

As shown in FIG. 6, the outer cover 42 includes a front edge 44, an upper edge 45, a lower edge 46, and a rear edge 47. The front edge 44 of the outer cover 42 constitutes the intake port 35 together with the front edge 39 of the inner cover 41. The front edge 44 extends rearward and upward. The front edge 44 has a shape bent rearward. The front edge 44 includes a first front edge portion 51 and a second front edge portion 52. The front edge 44 has a shape bent between the first front edge portion 51 and the second front edge portion 52. The first front edge portion 51 extends forward and upward in the vehicle side view. The second front edge portion 52 extends forward and downward in the vehicle side view.

The upper edge 45 of the outer cover 42 extends rearward and upward. The upper edge 45 includes a first upper edge portion 53 and a second upper edge portion 54. The first upper edge portion 53 is connected to the front edge 44. The first upper edge portion 53 extends rearward and upward from an upper end of the front edge 44. The first upper edge portion 53 protrudes upward from the second upper edge portion 54. The second upper edge portion 54 is disposed behind the first upper edge portion 53. The second upper edge portion 54 extends rearward and upward.

The lower edge 46 of the outer cover 42 extends rearward and upward. The lower edge 46 includes a first lower edge portion 55 and a second lower edge portion 56. The first lower edge portion 55 is connected to the front edge 44. The first lower edge portion 55 extends rearward and upward from a lower end of the front edge 44. The first lower edge portion 55 protrudes downward from the second lower edge portion 56. The second lower edge portion 56 is disposed behind the first lower edge portion 55. The second lower edge portion 56 extends rearward and upward.

A upper end of the rear edge 47 of the outer cover 42 is connected to the second upper edge portion 54. A lower end of the rear edge 47 is connected to the second lower edge portion 56. The rear edge 47 is disposed outward of the first air passage 28 in the vehicle width direction. In the vehicle side view, the rear edge 47 overlaps the first air passage 28. The rear edge 47 has a shape bent rearward. The rear edge 47 includes a first rear edge portion 57 and a second rear edge portion 58. The rear edge 47 has a shape bent between the first rear edge portion57 and the second rear edge portion 58. In the vehicle side view, the first rear edge portion 57 extends forward and upward. In the vehicle side view, the second rear edge portion 58 extends forward and downward from a rear end of the first rear edge portion 57

The left side cover 25 has a floating structure in which a portion of the outer cover 42 is separated from the inner cover 41. Specifically, the rear edge 47 of the outer cover 42 is disposed with a gap G1 from the inner cover 41. The gap G1 between the rear edge 47 and the inner cover 41 communicates with the second air passage 37. The gap G1 is visible in the vehicle side view. The gap G1 is provided rearward of the first upper edge portion 53. The gap G1 is provided rearward of the first lower edge portion 55. At least a portion of the gap G1 is disposed forward of the intake port 35.

The inner cover 41 includes a first inner edge portion 61 and a second inner edge portion 62. In the vehicle side view, the first inner edge portion 61 extends forward and upward. In the vehicle side view, the second inner edge portion 62 extends forward and downward. The first inner edge portion 61 is disposed with the gap G1 from the first rear edge portion 57. The first rear edge portion 57 is separated from the first inner edge portion 61 in the front-rear direction. The second inner edge portion 62 is disposed with the gap G1 from the second rear edge portion 58. The second rear edge portion 58 is separated from the second inner edge portion 62 in the front-rear direction.

As shown in FIG. 8, the first rear edge portion 57 is separated from the first inner edge portion 61 in the vehicle width direction. The upper edge 45 is connected to the inner cover 41. Specifically, the first upper edge portion 53 is connected to the inner cover 41. The second upper edge portion 54 is connected to the inner cover 41.

As shown in FIG. 9, the second rear edge portion 58 is separated from the second inner edge portion 62 in the vehicle width direction. A portion of the lower edge 46 of the outer cover 42 is disposed with the gap G1 from the inner cover 41. Specifically, the second lower edge portion 56 is disposed with the gap G1 from inner cover 41. The second lower edge portion 56 is separated from the inner cover 41 in the vehicle width direction. The first lower edge portion 55 is connected to the inner cover 41.

As shown in FIG. 15, the inner cover 41 includes a first inner cover portion 63, a second inner cover portion 64, and a third inner cover portion 65. The first inner cover portion 63 is attached to the left tank cover 32. The first inner cover portion 63 is connected to the opening 320 of the tank cover 24. The first inner cover portion 63 includes a recessed portion 66 recessed rearward. The second inner cover portion 64 is disposed in the recessed portion 66. The first inner cover portion 63 includes the first inner edge portion 61 and the second inner edge portion 62 described above. The first inner edge portion 61 and the second inner edge portion 62 constitute a portion of the recessed portion 66.

The second inner cover portion 64 is attached to the first inner cover portion 63. The second inner cover portion 64 is connected to the recessed portion 66. The second inner cover portion 64 includes the exhaust port 36 described above. The third inner cover portion 65 is disposed in front of the second inner cover portion 64. The third inner cover portion 65 is attached to the first inner cover portion 63. The third inner cover portion 65 constitutes a portion of the intake port 35.

As shown in FIGS. 11 and 12, the inner intake port 43 described above is provided between the second inner cover portion 64 and the third inner cover portion 65. The third inner cover portion 65 includes a plurality of ribs 67. The plurality of ribs 67 respectively protrude from an inner side surface of the third inner cover portion 65 into the second air passage 37. The plurality of ribs 67 are disposed rearward of the intake port 35 and extend rearward and upward. The plurality of ribs 67 guide the air drawn from the intake port 35 and flowing through the second air passage 37.

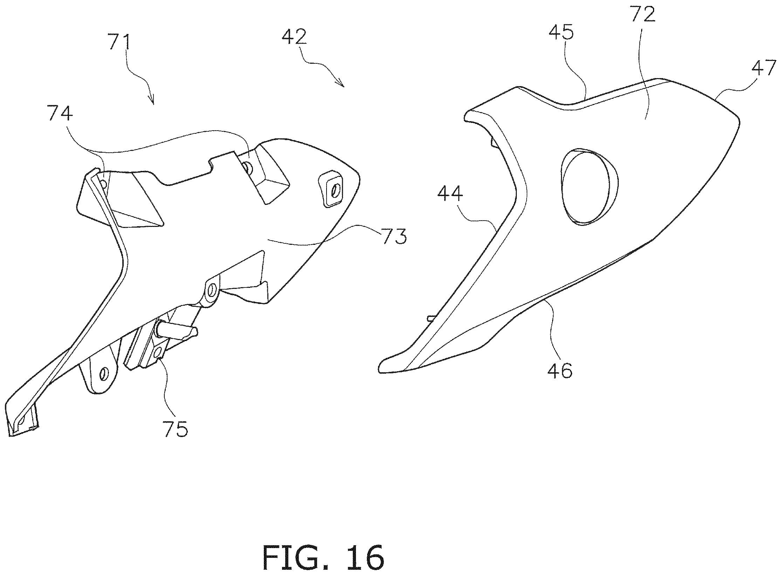

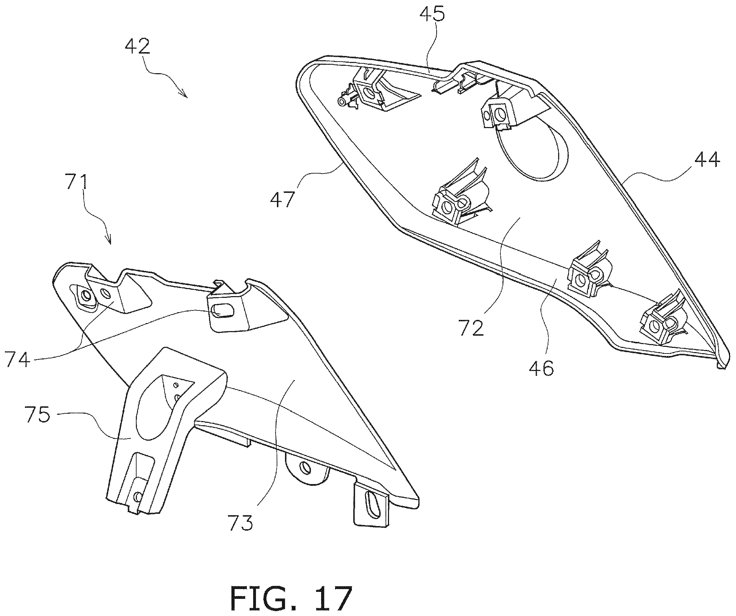

FIG. 16 and 17 are an exploded perspective view of the outer cover42. As shown in FIGS. 16 and 17, the outer cover 42 includes a first cover 71 and a second cover 72. The first cover 71 and the second cover 72 are separate from each other. The first cover 71 is attached to the inner cover 41. The second cover 72 is disposed outward of the first cover 71 in the vehicle width direction.

As shown in FIG. 17, the first cover 71 includes an inner surface portion 73, a plurality of attaching portions 74, and an arm portion 75. The inner surface portion 73 constitutes the inner side surface of the second air passage 37. The second cover 72 is disposed outward of the inner surface portion 73 in the vehicle width direction, and covers the inner surface portion 73 from outward in the vehicle width direction. The plurality of attaching portions 74 are attached to the inner cover 41 by fitting. The arm portion 75 is attached to the inner cover 41 by a screw 76 shown in FIG.6. The arm portion 75 protrudes inward in the vehicle width direction and downward from the inner surface portion 73.

As shown in FIG. 11, the inner cover 41 includes an attachment opening 77 and an attaching portion 78. The attachment opening 77 is provided in the second inner cover portion 64. The attachment opening 77 opens downward. The arm portion 75 is disposed so as to pass through the attachment opening 77. The arm portion 75 extends outward in the vehicle width direction and upward from the attaching portion 78 in a state of being fixed to the attaching portion 78. The attaching portion 78 is provided on the first inner cover portion 63. The arm portion 75 is attached to the attaching portion 78. The arm portion 75 is fixed to the attaching portion 78 by the screw 76 shown in FIG.6.

As shown in FIG. 6, the screw 76 is exposed to the outside of the straddled vehicle 1. The screw 76 is disposed facing a lateral side of the left side cover 25. In the vehicle side view, the screw 76 is disposed at a position not overlapping the outer cover 42. The screw 76 is located below the outer cover 42. The screw 76 is attached to the left side cover 25 from outward of the left side cover 25. Therefore, the screw 76 can be easily accessed from outward of the left side cover 25.

The configuration of the first air passage 28 passing the left of the fuel tank 5 and the left side cover 25 has been described above, but as shown in FIG. 3, a first air passage 29 similar to the first air passage 28 is provided in the right tank cover 33. The right side cover 26 is connected to the first air passage 29 in the right tank cover 33, and has a symmetrical structure with the left side cover 25.

In the straddled vehicle 1 according to the present embodiment described above, the left side cover 25 includes the inner cover 41 and the outer cover 42 detachably attached to the inner cover 41. Therefore, by removing the outer cover 42, access to the inside of the vehicle becomes easy, and maintainability can be improved. In addition, the rear edge 47 of the outer cover 42 is disposed with the gap G1 from the inner cover 41. Therefore, a weight of the left side cover 25 can be reduced as compared with the case where there is no gap G1. Thereby, an increase in a vehicle weight can be suppressed.

In the vehicle side view, the radiator 13 is disposed below the outer cover 42. Therefore, by removing the outer cover 42, access to the radiator 13 becomes easy. Thereby, maintainability of the radiator 13 is improved.

The rear edge 47 of the outer cover 42 includes the first rear edge portion 57 and the second rear edge portion 58. Therefore, since the rear edge 47 of the outer cover 42 has a shape extending rearward, the gap G1 can be made longer. Thereby, the weight of the left side cover 25 can be further reduced.

The inner cover 41 includes the first inner edge portion 61 and the second inner edge portion 62. Therefore, the gap G1 can be formed between the inner cover 41 and the outer cover 42 while suppressing the inner cover 41 from protruding from the outer cover 42.

The outer cover 42 has a double structure of the first cover 71 and the second cover 72. Therefore, the second cover 72 is supported by the inner cover 41 via the first cover 71, so that a structure in which the rear edge 47 of the outer cover42 is disposed with the gap G1 from the inner cover 41 can be easily and firmly formed. Moreover, since the outer cover 42 has the double structure, the rigidity of the outer cover 42 can be improved. Therefore, although the outer cover 42 is disposed with the gap G1 from the inner cover 41, insufficient rigidity can be prevented.

The first cover 71 is attached to the attaching portion 78 of the inner cover 41 by the arm portion 75. Therefore, the outer cover 42 is supported by the inner cover 41 via the arm portion 75, so that the structure in which the rear edge 47 of the outer cover42 is disposed with the gap G1 from the inner cover 41 can be easily and firmly formed.

In the vehicle front view, at least a portion of the intake port 35 is disposed outward of the front suspension 18 in the vehicle width direction, and in the vehicle side view, the intake port 35 is disposed to be inclined rearward and upward together with the front suspension 18. Therefore, the air that has been disturbed against the front suspension 18 can be efficiently sucked from the intake port 35.

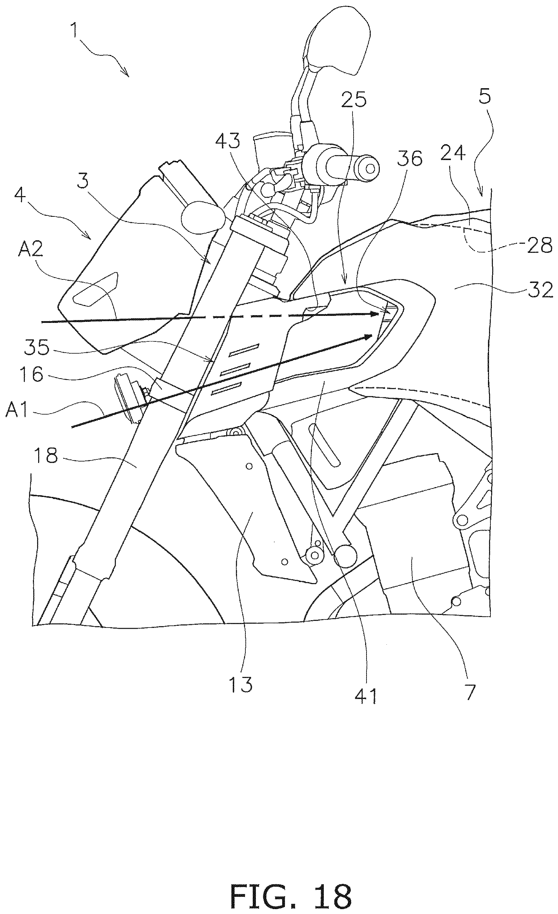

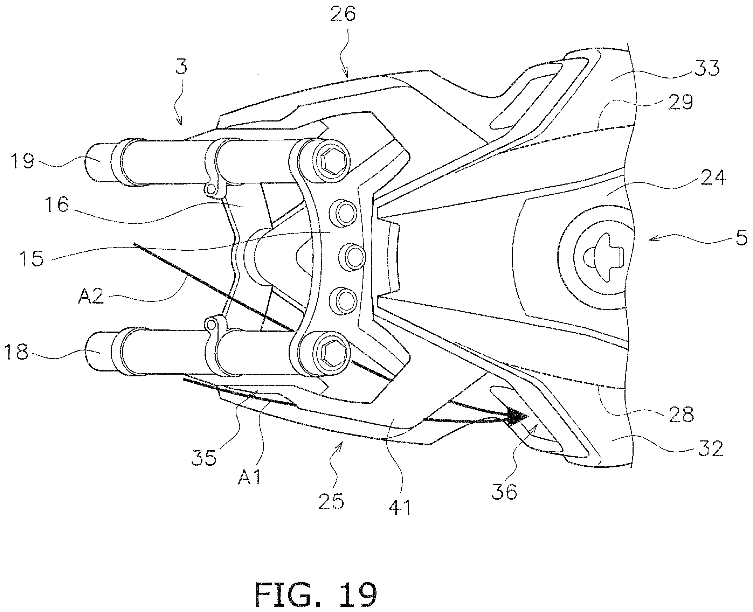

FIG. 18 is a side view showing a flow of air guided by the left side cover 25. FIG. 19 is a top view showing the flow of air guided by the left side cover 25. Note that in FIG. 18 and 19, the outer cover 42 is omitted.

In the straddled vehicle 1 according to the present embodiment, in the vehicle front view, the entire intake port 35 is disposed outward of the front suspension 18 in the vehicle width direction. Therefore, as shown by an arrow A1 in FIGS. 18 and 19, the air flowing outside of the front suspension 18 can be efficiently sucked by the intake port 35 and guided to the first air passage 28.

In addition, the inner cover 41 includes the inner intake port 43 disposed inward of the intake port 35 in the vehicle width direction. Therefore, as indicated by an arrow A2, the air flowing inside of the front suspension 18 can be efficiently sucked from the inner intake port 43 and guided to the first air passage 28.

The left side cover 25 includes the lattice member 38 provided across the exhaust port 36. Therefore, the lattice member 38 can prevent an entry of foreign matter into the passage.

In the vehicle side view, the rear edge 47 overlaps the first air passage 28. Therefore, the first air passage 28 and the left side cover 25 can be compactly arranged in the front-rear direction.

The effect by the left side cover 25 has been explained above, the same effect can be acquired also by the right side cover 26.

The configuration of the side covers 25 and 26 may be changed. For example, the shape or arrangement of the outer cover 42 may be changed. In the aforementioned embodiment, the inner cover 41 is composed of three parts, but may be composed of more than three or less than three parts. The outer cover 42 is composed of two parts, but may be composed of more than two or one part.

The shape or arrangement of the intake port 35 may be changed. For example, in the vehicle front view, a portion of the intake port 35 may be disposed inward of the front suspension in the vehicle width direction. The shape or arrangement of the inner intake port 43 may be changed. Alternatively, the inner intake port 43 may be omitted.

The configuration of the tank cover 24 may be changed. Alternatively, the tank cover 24 may be omitted. The first air passage 28 may be configured by a part other than the tank cover 24. The arrangement of the air cleaner 27 is not limited below the seat 6, the air cleaner 27 may be disposed below the fuel tank 5.

## Claims

1. A straddled vehicle (1), comprising:
a head pipe (11);
a steering device (3) rotatably supported by the head pipe (11);
a fuel tank (5) disposed behind the head pipe (11);
a seat (6) disposed behind the fuel tank (5);
an air cleaner (27) disposed below the fuel tank (5) or the seat (6);
a first air passage (28) that guides air to the air cleaner (27), at least a portion of the first air passage (28) being disposed to a lateral side of the fuel tank (5); **characterized by**
a side cover (25) connected to the first air passage (28) and including an intake port (35) disposed forward of the first air passage (28) and opening forward, an exhaust port (36) communicating with the first air passage (28), and a second passage (37) connecting the intake port (35) and the exhaust port (36), wherein
the side cover (25) includes
an inner cover (41), and
an outer cover (42) disposed outward of the inner cover (41) in a vehicle width direction and detachably attached to the inner cover (41),
a rear edge of the outer cover (42) is disposed with a gap from the inner cover (41).

2. The straddled vehicle (1) according to claim 1, further comprising:
a radiator (13) disposed below the outer cover (42) in a vehicle front view.

3. The straddled vehicle (1) according to claim 1 or 2, wherein
the rear edge of the outer cover (42) includes
a first rear edge portion (57) extending forward and upward in a vehicle side view, and
a second rear edge portion (58) extending forward and upward from a rear end of the first rear edge portion (57) in the vehicle side view.

4. The straddled vehicle (1) according to claim 3, wherein
the inner cover (41) includes
a first inner edge portion (61) disposed with a gap (G1) from the first rear edge portion (57) and extending forward and upward in the vehicle side view, and
a second inner edge portion (62) disposed with a gap (G1) from the second rear edge portion (58) and extending forward and downward in the vehicle side view.

5. The straddled vehicle (1) according to any one of claims 1 to 4, wherein
the outer cover (42) includes
a first cover (71) attached to the inner cover (41), and
a second cover (72) disposed outward of the first cover (71) in the vehicle width direction.

6. The straddled vehicle (1) according to claim 5, wherein
the inner cover (41) includes a attaching portion (78) to which the first cover (71) is attached, and
the first cover (71) includes an arm portion (75) extending outward in the vehicle width direction from the attaching portion (78).

7. The straddled vehicle (1) according to any one of claims 1 to 6, wherein
the steering device (3) includes a front suspension (18) that inclines rearward and upward,
in the vehicle front view, at least a portion of the intake port (35) is disposed outward of the front suspension (18) in the vehicle width direction, and
in the vehicle side view, the intake port (35) is disposed to be inclined rearward and upward together with the front suspension (18).

8. The straddled vehicle (1) according to any one of claims 1 to 7, wherein
the inner cover (41) includes an inner intake port (43) disposed inward of the intake port (35) in the vehicle width direction.

9. The straddled vehicle (1) according to claim 8, wherein
the steering device (3) includes a front suspension (18), and
in the vehicle front view, the entire intake port (35) is disposed outward of the front suspension (18) in the vehicle width direction.

10. The straddled vehicle (1) according to any one of claims 1 to 9, wherein
the side cover (25) includes a lattice member (38) provided across the exhaust port (36).

11. The straddled vehicle (1) according to any one of claims 1 to 10, further comprising:
a tank cover (24) attached to the fuel tank (5), wherein
at least a portion of the first air passage (28) is provided between the fuel tank (5) and the tank cover (24).

12. The straddled vehicle (1) according to any one of claims 1 to 11, wherein
in the vehicle side view, the rear edge (47) overlaps the first air passage (28).

## Patentansprüche

1. Spreizsitz-Fahrzeug (1), umfassend:
ein Steuerrohr (11);
eine Lenkeinrichtung (3), die über das Steuerrohr (11) drehbar gelagert ist;
einen Kraftstofftank (5), der hinter dem Steuerrohr (11) angeordnet ist;
einen Sitz (6), der hinter dem Kraftstofftank (5) angeordnet ist;
einen Luftfilter (27), der unter dem Kraftstofftank (5) oder dem Sitz (6) angeordnet ist;
einen ersten Luftkanal (28), der Luft zu dem Luftfilter (27) leitet, wobei wenigstens ein Teil des ersten Luftkanals (28) an einer Längsseite des Kraftstofftanks (5) angeordnet ist;
**gekennzeichnet durch**
eine seitliche Verkleidung (25), die mit dem ersten Luftkanal (28) verbunden ist und eine Einlassöffnung (35), die vor dem ersten Luftkanal (28) angeordnet ist und sich nach vorn öffnet, eine Auslassöffnung (36), die mit dem ersten Luftkanal (28) in Verbindung steht, sowie einen zweiten Kanal (37) enthält, der die Einlassöffnung (35) und die Auslassöffnung (36) verbindet, wobei
die seitliche Verkleidung (25) einschließt:
eine innere Verkleidung (41), und
eine äußere Verkleidung (42), die in einer Fahrzeug-Breitenrichtung außerhalb der inneren Verkleidung (41) angeordnet und abnehmbar an der inneren Verkleidung (41) angebracht ist,
eine Hinterkante der äußeren Verkleidung (42) mit einem Zwischenraum zu der inneren Verkleidung (41) angeordnet ist.

2. Spreizsitz-Fahrzeug (1) nach Anspruch 1, das des Weiteren umfasst:
einen Kühler (13), der in einer Fahrzeug-Vorderansicht unter der äußeren Verkleidung (42) angeordnet ist.

3. Spreizsitz-Fahrzeug (1) nach Anspruch 1 oder 2, wobei
die Hinterkante der äußeren Verkleidung (42) einschließt:
einen ersten Hinterkantenabschnitt (57), der sich in einer Fahrzeug-Seitenansicht nach vorn und nach oben erstreckt, sowie
einen zweiten Hinterkantenabschnitt (58), der sich in der Fahrzeug-Seitenansicht von einem hinteren Ende des ersten Hinterkantenabschnitts (57) nach vorn und nach oben erstreckt.

4. Spreizsitz-Fahrzeug (1) nach Anspruch 3, wobei
die innere Verkleidung (41) enthält:
einen ersten Innenkantenabschnitt (61), der mit einem Zwischenraum (G1) zu dem ersten Hinterkantenabschnitt (57) angeordnet ist und sich in der Fahrzeug-Seitenansicht nach vorn und nach oben erstreckt, sowie
einen zweiten Innenkantenabschnitt (62), der mit einem Zwischenraum (G1) zu dem zweiten Hinterkantenabschnitt (58) angeordnet ist und sich in der Fahrzeug-Seitenansicht nach vorn und nach unten erstreckt.

5. Spreizsitz-Fahrzeug (1) nach einem der Ansprüche 1 bis 4, wobei
die äußere Verkleidung (42) einschließt:
eine erste Verkleidung (71), die an der inneren Verkleidung (41) angebracht ist, sowie
eine zweite Verkleidung (72), die in der Fahrzeug-Breitenrichtung außerhalb der ersten Verkleidung (71) angeordnet ist.

6. Spreizsitz-Fahrzeug (1) nach Anspruch 5, wobei:
die innere Verkleidung (41) einen Anbringungsabschnitt (78) enthält, an dem die erste Verkleidung (71) angebracht ist, und
die erste Verkleidung (71) einen Armabschnitt (75) enthält, der sich von dem Anbringungsabschnitt (78) in der Fahrzeug-Breitenrichtung nach außen erstreckt.

7. Spreizsitz-Fahrzeug (1) nach einem der Ansprüche 1 bis 6, wobei
die Lenkeinrichtung (3) eine vordere Aufhängung (18) enthält, die nach hinten und nach oben geneigt ist,
wenigstens ein Teil der Einlassöffnung (35), in der Fahrzeug-Vorderansicht, in der Fahrzeug-Breitenrichtung außerhalb der vorderen Aufhängung (18) angeordnet ist, und
die Einlassöffnung (35), in der Fahrzeug-Seitenansicht, so angeordnet ist, dass sie zusammen mit der vorderen Aufhängung (18) nach hinten und nach oben geneigt ist.

8. Spreizsitz-Fahrzeug (1) nach einem der Ansprüche 1 bis 7, wobei
die innere Verkleidung (41) eine innere Einlassöffnung (43) enthält, die in der Fahrzeug-Breitenrichtung von der Einlassöffnung (35) aus innen angeordnet ist.

9. Spreizsitz-Fahrzeug (1) nach Anspruch 8, wobei
die Lenkeinrichtung (3) eine vordere Aufhängung (18) enthält, und
die gesamte Einlassöffnung (35), in der Fahrzeug-Vorderansicht, in der Fahrzeug-Breitenrichtung außerhalb der vorderen Aufhängung (18) angeordnet ist.

10. Spreizsitz-Fahrzeug (1) nach einem der Ansprüche 1 bis 9, wobei
die seitliche Verkleidung (25) ein Gitterelement (38) enthält, das über die Auslassöffnung (36) angeordnet ist.

11. Spreizsitz-Fahrzeug (1) nach einem der Ansprüche 1 bis 10, das des Weiteren umfasst:
eine Tankverkleidung (24), die an dem Kraftstofftank (5) angebracht ist, wobei
wenigstens ein Teil des ersten Luftkanals (28) zwischen dem Kraftstofftank (5) und der Tankverkleidung (24) angeordnet ist.

12. Spreizsitz-Fahrzeug (1) nach einem der Ansprüche 1 bis 11, wobei, in der Fahrzeug-Seitenansicht, die Hinterkante (47) den ersten Luftkanal (28) überlappt.

## Revendications

1. Véhicule à chevauchement (1), comprenant :
un tuyau de tête (11) ;
un dispositif de direction (3) supporté en rotation par le tuyau de tête (11) ;
un réservoir de carburant (5) disposé derrière le tuyau de tête (11) ;
un siège (6) disposé derrière le réservoir de carburant (5) ;
un filtre à air (27) disposé sous le réservoir de carburant (5) ou le siège (6) ;
un premier passage d'air (28) qui guide de l'air vers le filtre à air (27), au moins une partie du premier passage d'air (28) étant disposée sur un côté latéral du réservoir de carburant (5) ;
**caractérisé par**
un capot latéral (25) relié au premier passage d'air (28) et comprenant un orifice d'admission (35) en avant du premier passage d'air (28) et s'ouvrant vers l'avant, un orifice d'échappement (36) communiquant avec le premier passage d'air (28), et un second passage (37) reliant l'orifice d'admission (35) et l'orifice d'échappement (36), où
le capot latéral (25) comprend
un capot intérieur (41), et
un capot extérieur (42) disposé à l'extérieur du capot intérieur (41) dans le sens de la largeur du véhicule et fixé de manière amovible au capot intérieur (41),
un bord arrière du capot extérieur (42) est disposé avec un espacement par rapport au capot intérieur (41).

2. Véhicule à chevauchement (1) selon la revendication 1, comprenant en outre un radiateur (13) disposé sous le capot extérieur (42) dans une vue de face du véhicule.

3. Véhicule à chevauchement (1) selon la revendication 1 ou 2, où
le bord arrière du capot extérieur (42) comprend
une première partie de bord arrière (57) s'étendant vers l'avant et vers le haut dans une vue latérale du véhicule, et
une deuxième partie de bord arrière (58) s'étendant vers l'avant et vers le haut à partir d'une extrémité arrière de la première partie de bord arrière (57) dans la vue latérale du véhicule.

4. Véhicule à chevauchement (1) selon la revendication 3, où
le capot intérieur (41) comprend
une première partie de bord intérieur (61) disposée avec un espace (G1) par rapport à la première partie de bord arrière (57) et s'étendant vers l'avant et vers le haut dans la vue latérale du véhicule, et
une deuxième partie de bord intérieur (62) disposée avec un espace (GI) par rapport à la deuxième partie de bord arrière (58) et s'étendant vers l'avant et vers le bas dans la vue latérale du véhicule.

5. Véhicule à chevauchement (1) selon l'une quelconque des revendications 1 à 4, où
le capot extérieur (42) comprend
un premier capot (71) fixé au capot intérieur (41), et
un deuxième capot (72) disposé à l'extérieur du premier capot (71) dans le sens de la largeur du véhicule.

6. Véhicule à chevauchement (1) selon la revendication 5, où
le capot intérieur (41) comprend une partie de fixation (78) à laquelle le premier capot (71) est fixé et
le premier capot (71) comprend une partie de bras (75) s'étendant vers l'extérieur dans le sens de la largeur du véhicule à partir de la partie de fixation (78).

7. Véhicule à chevauchement (1) selon l'une quelconque des revendications 1 à 6 où
le dispositif de direction (3) comprend une suspension avant (18) qui s'incline vers l'arrière et vers le haut,
dans la vue de face du véhicule, au moins une partie de l'orifice d'admission (35) est disposée à l'extérieur de la suspension avant (18) dans le sens de la largeur du véhicule, et
dans la vue latérale du véhicule, l'orifice d'admission (35) est disposé de manière à être incliné vers l'arrière et vers le haut avec la suspension avant (18).

8. Véhicule à chevauchement (1) selon l'une quelconque des revendications 1 à 7, où
le capot intérieur (41) comprend un orifice d'admission intérieur (43) disposé à l'intérieur de l'orifice d'admission (35) dans le sens de la largeur du véhicule.

9. Véhicule à chevauchement selon la revendication 8, où
le dispositif de direction (3) comprend une suspension avant (18), et
dans la vue de face du véhicule, la totalité de l'orifice d'admission (35) est disposée à l'extérieur de la suspension avant (18) dans le sens de la largeur du véhicule.

10. Véhicule à chevauchement (1) selon l'une quelconque des revendications 1 à 9, où
le capot latéral (25) comprend un treillis (38) prévu en travers de l'orifice d'échappement (36).

11. Véhicule à chevauchement (1) selon l'une quelconque des revendications 1 à 10, comprenant en outre
un capot de réservoir (24) fixé au réservoir de carburant (5), où
au moins une partie du premier passage d'air (28) est prévue entre le réservoir de carburant (5) et le capot de réservoir (24).

12. Véhicule à chevauchement (1) selon l'une quelconque des revendications 1 à 11, où
dans la vue latérale du véhicule, le bord arrière (47) se superpose au premier passage d'air (28).
